# EUROPEAN PATENT SPECIFICATION

(11) **EP 1 701 117 B1**
(45) Date of publication and mention of the grant of the patent: **10.12.2008**
(21) Application number: 06007444.0
(22) Date of filing: 23.07.2001
(51) Int. Cl.: F25B 41/06, B60H 1/32, F16L 9/19

(54) **Refrigerant tubing for a vehicle air conditioning system**
Kältemittelrohrleitung für eine Fahrzeugklimaanlage
Tuyauterie de frigorigène pour système de climatisation de véhicule

(43) Date of publication of application: 13.09.2006
(62) Divisional of application: 01117852.2
(73) Proprietor: Zexel Valeo Climate Control Corporation, Ohsato-gun, Saitama 360-0193 (JP)
(72) Inventor: Hesse, Ullrich, Dr.-Ing., 68766 Hockenheim (DE)
(74) Representative: Popp, Eugen

(56) References cited:
- EP-A- 0 459 738
- EP-A- 0 895 012
- EP-A- 0 990 828
- EP-A- 1 020 691
- DE-A- 19 808 893
- GB-A- 1 517 757
- US-A- 2 337 862
- US-A- 2 482 171

## Description

The present invention relates to tubing for use in carrying the refrigerant in a vehicle air conditioning system, and in particular to tubing for use in carrying a CO₂ refrigerant.

Air conditioning systems for automotive vehicles use cold-vapour compression refrigeration cycle wherein a refrigerant is circulated in a closed circuit made up of a compressor, a condenser, an expansion valve and an evaporator. In the evaporator, the refrigerant, which is under low pressure, is evaporated into a gaseous phase. The evaporation lowers the temperature of the air surrounding and passing through the evaporator. Such air may then be blown into the passenger compartment of the vehicle. The compressor sucks the refrigerant from the evaporator, compresses it and passes it to the condenser, where the refrigerant gives up its heat to the environment, and as a result of its increased pressure and loss of heat condenses back to a liquid phase. Finally, the liquid refrigerant is expanded to a lower vaporizing pressure via the expansion valve and returned to the evaporator.

In an automotive vehicle, the compressor is usually driven directly by the vehicle engine and to this end is usually mounted thereon as an ancillary component. The tubing carrying the refrigerant to the various components of refrigeration cycle must therefore be sufficiently flexible to compensate for the relative movement of the engine with respect to these components and to the vehicle chassis.

Traditionally, tetrafluoroethane (R134a) has been used as the refrigerant in automotive air conditioning systems and this has enabled multi-layered tubing typically comprising a nylon diffusion barrier and a fabric-reinforced rubber layer to be used to carry the refrigerant around the refrigeration system. The use of carbon dioxide (CO₂) as a refrigerant is now being investigated widely to replace R134a as the refrigerant in the air conditioning systems of automotive vehicles. However, unlike conventional refrigerants such as R134a, it has a significantly higher vapour pressure and will dissolve or diffuse far more rapidly than R134a in or through elastomers. This ultimately results in the destruction of the elastomer and therefore of any elastomeric tubing carrying the CO₂, particularly upon pressure relief. To date, all attempts at developing a suitable elastomeric tubing for carrying CO₂ have failed. As a result, reinforced, corrugated metal tubing is used. However, this is expensive and transmits noise far more loudly than the elastomeric tubing used for transporting R134a.

To overcome the aforementioned disadvantages, tubing materials incorporating metal foils as a diffusion barrier have been tried. However, these have been unsuccessful because the foils are unable to withstand the mechanical stresses imposed upon them in use and as a result often break or crack with the result that they no longer operate effectively as a diffusion barrier.

EP-A-0 990 828 discloses a tubing according to the preamble of claim 1.

The object of the present invention is to provide a flexible tubing for use in carrying the refrigerant, and in particular a CO₂ refrigerant, in a vehicle air conditioning system which in its basic form is impervious to diffusion and capable of withstanding the mechanical stresses to which it will be subjected to in use and in a more refined form overcomes or substantially mitigates all of the aforementioned disadvantages, in particular that relating to noise.

According to the present invention there is provided tubing for use in carrying a refrigerant according to the features of claim 1.

Preferably, each of the capillary tubes has an internal diameter in the range of 1.0 to 4.0 mm inclusive and is made of any one or a combination of copper, steel, brass and aluminum.

Preferably also, the bundle of tubes are encased in an elastomeric material, which may, for example, comprise a natural or synthetic polymeric material such as rubber. An intermediate layer, such as a fabric layer, may be interposed between the bundle of tubes and the casing of elastomeric material.

According to the invention, the bundle of metal capillary tubes are bunched together and are twisted together to form a cord.

If no encasement of an elastic material is used, the bundle or cord may be used for heat exchange as e.g. precooling of hot discharge gas.

The present invention will now be described by way of example with reference to the accompanying drawing, in which:-
Fig. 1 is a transverse cross-sectional view of a first embodiment of tubing in accordance with the present invention; and
Fig. 2 is a cross-sectional view of tubing which does not fall under the scope of the invention.

As shown in the drawing, tubing 1 in accordance with the present invention comprises a plurality of metal capillary tubes 2 which are bundled together. Each of the tubes 2 has an internal diameter in the range of 1.0 to 4.0 mm inclusive and owing to their small diameters it has been found that the tubing is sufficiently flexible for use in carrying a refrigerant in a vehicle air conditioning system. In particular the tubing 1 is sufficiently flexible for use in carrying refrigerant around a vehicle engine.

Capillary tubes 2 made of any one or a combination of copper, steel, brass and aluminum are suitable for use in the tubing 1.

The transport characteristics of CO₂ are good and as high pressures must be used when it is employed as a refrigerant, tubing with only a small diameter is required in any event. This means that the capillary tubes 2 in the tubing 1 of the present invention are particularly suitable for use in transporting a CO₂ refrigerant, the refrigerant mass flow being distributed between each of the individual capillary tubes 2. The pressure loss is then adjusted dependent on the number of capillary tubes 2 used and their diameters. The inherent properties of CO₂ are advantageous in this respect and enable an acceptably low pressure loss to be maintained. It has been found that seven capillary tubes 2 can be sufficient for use in transporting a CO₂ refrigerant for a vehicle air conditioning system but it will be appreciated that the number of tubes 2 forming the tubing may be varied for different applications.

In order to provide protection against corrosion, to improve sound absorption and to increase the stability of the tubing 1, the bundle of tubes 2 is preferably encased in an elastomeric material 3. Suitable materials 3 natural or synthetic polymeric materials such as rubber. An intermediate layer (not shown), such as a fabric layer, may be interposed between the bundle of tubes 2 and the casing of elastomeric material 3.

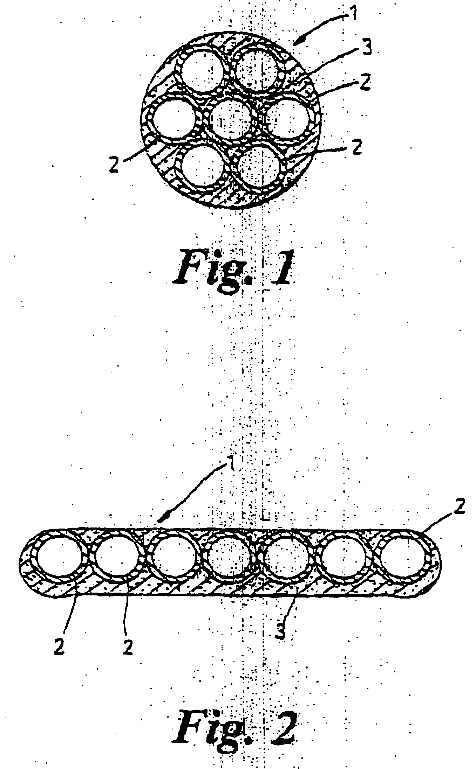

According to the invention as shown in Fig. 1, the bundle of tubes 2 are bunched together and are twisted together along their length in the manner of the strands of a cord.

As shown in Fig. 2, the lengths of metal tubes 2 may be laid side by side to form a ribbon. Such an arrangement is particularly advantageous for use in vehicle as the ribbon tubing can be laid, for example, along a vehicle's bodywork in a space saving manner.

The cord can be used to provide additional heat transfer surface, if no elastic embodiment is used. Thus e.g. the need for a large heat exchange surface of the gascooler can be reduced.

## Claims

1. Tubing for use in carrying a refrigerant in a vehicle air conditioning system
**characterised in that**
it comprises a flexible bundle of metal capillary tubes (2), the bundle of metal capillary tubes (2) are bunched together, and the capillary tubes (2) are twisted together along their length to form a cord.

2. Tubing as claimed in Claim 1,
**characterised in that**
each of the capillary tubes (2) has an internal diameter in the range of 1.0 to 4.0 mm inclusive.

3. Tubing as claimed in Claim 1 or Claim 2,
**characterised in that**
the bundle of tubes (2) are encased in an elastomeric material (3).

4. Tubing as claimed in Claim 3,
**characterised in that**
the elastomeric material (3) comprises a natural or synthetic polymeric material.

5. Tubing as claimed in Claim 3 or Claim 4,
**characterised in that**
an intermediate layer is interposed between the bundle of tubes (2) and the casing of elastomeric material.

6. Tubing as claimed in Claim 5,
**characterised in that**
the intermediate layer comprises a fabric layer.

7. Tubing as claimed in any one of Claims 1 to 6,
**characterised in that**
the metal tubes (2) are made of any one or a combination of copper, steel and aluminium.

8. Tubing as claimed in any one of Claim 1 or Claim 2,
**characterised in that**
the tubing is used as heat exchanger.

9. Tubing as claimed in Claim 1 or Claim 2,
**characterised in that**
the tubing is part of the discharging and is used to cool the discharge gas of the compressor.

## Patentansprüche

1. Rohrleitung zur Verwendung beim Befördern eines Kühlmittels in einem Fahrzeug-Klimaanlagensystem, **dadurch gekennzeichnet, dass** sie ein flexibles Bündel von Metallkapillarröhren (2) enthält, wobei das Bündel von Metallkapillarröhren (2) zusammengebündelt ist, und die Kapillarröhren (2) entlang ihrer Länge zusammenverdrillt sind, um einen Strang auszubilden.

2. Rohrleitung nach Anspruch 1, **dadurch gekennzeichnet, dass** jede von den Kapillarröhren (2) einen Innendurchmesser im Bereich von einschließlich 1,0 bis 4,0 mm hat.

3. Rohrleitung nach Anspruch 1 oder 2, **dadurch gekennzeichnet, dass** das Bündel von Röhren (2) in einem Elastomermaterial (3) eingeschlossen ist.

4. Rohrleitung nach Anspruch 3, **dadurch gekennzeichnet, dass** das Elastomermaterial (3) ein natürliches oder synthetisches Polymermaterial enthält.

5. Rohrleitung nach Anspruch 3 oder 4, **dadurch gekennzeichnet, dass** eine Zwischenschicht zwischen dem Bündel von Röhren (2) und dem Einschluss des Elastomermaterials zwischengelegt ist.

6. Rohrleitung nach Anspruch 5, **dadurch gekennzeichnet, dass** die Zwischenschicht eine Gewebeschicht enthält.

7. Rohrleitung nach einem der Ansprüche 1 bis 6, **dadurch gekennzeichnet, dass** die Metallröhren (2) aus einem oder aus einer Kombination aus Kupfer, Stahl und Aluminium erstellt sind.

8. Rohrleitung nach einem der Ansprüche 1 oder 2, **dadurch gekennzeichnet, dass** die Rohrleitung als Wärmetauscher verwendet wird.

9. Rohrleitung nach Anspruch 1 oder 2, **dadurch gekennzeichnet, dass** die Rohrleitung ein Teil von einer Entladung ist und dazu verwendet wird, um das Entladegas von dem Kompressor zu kühlen.

## Revendications

1. Tubulure destinée être utilisée pour transporter un frigorigène dans un système de climatisation de véhicule, **caractérisée en ce que**
elle comprend un faisceau souple de tubes capillaires métalliques (2), les tubes capillaires métalliques (2) du faisceau sont regroupés ensemble, et les tubes capillaires (2) sont torsadés ensemble sur leur longueur pour former une corde.

2. Tubulure selon la revendication 1, **caractérisée en ce que** chacun des tubes capillaires (2) a un diamètre interne dans la plage de 1 à 4 mm y compris.

3. Tubulure selon la revendication 1 ou 2, **caractérisée en ce que** le faisceau de tubes (2) est enfermé dans un matériau élastomérique (3).

4. Tubulure selon la revendication 3, **caractérisée en ce que** le matériau élastomérique (3) est constitué d'un matériau polymérique naturel ou synthétique.

5. Tubulure selon la revendication 3 ou 4, **caractérisée en ce qu'**une couche intermédiaire est interposée entre le faisceau de tubes (2) et l'enveloppe de matériau élastomérique.

6. Tubulure selon revendication 5, **caractérisée en ce que** la couche intermédiaire comprend une couche de tissu.

7. Tubulure selon l'une quelconque des revendications 1 à 6, **caractérisée en ce que** les tubes métalliques (2) sont réalisés en un matériau quelconque du cuivre, de l'acier et de l'aluminium, ou en une combinaison de ceux-ci.

8. Tubulure selon la revendication 1 ou 2, **caractérisée en ce que** la tubulure est utilisée en tant qu'échangeur de chaleur.

9. Tubulure selon la revendication 1 ou 2, **caractérisée en ce que** la tubulure est une partie de l'évacuation, et est évacuée pour refroidir le gaz de décharge du compresseur.
